# EUROPEAN PATENT APPLICATION

(11) **EP 1 098 491 A2**
(43) Date of publication of application: **09.05.2001**
(21) Application number: 00309865.4
(22) Date of filing: 07.11.2000
(51) Int. Cl.: H04L 29/06, H04L 12/26

(54) **System and method for identifying related protocol data units**

(30) Priority: 08.11.1999 US 436436
(71) Applicant: Agilent Technologies Inc., Santa Clara, California 95052-8043 (US)
(72) Inventor: Meyer, Kevin P., Calgary, Alberta T3K 4W2 (CA)
(74) Representative: Powell, Stephen David

(57) **Abstract**

A method for identifying related protocol data units (PDUs) in a data path of a data network operates by capturing (302) a plurality of PDUs (222) that are communicated along the data path. Then, one (or more) of the captured PDUs is selected (306) and used (308) as a template for structuring a search. Thereafter, the method searches (236, 310) through the plurality of captured PDU to identify (230) those PDUs having fields (FIG. 8) that are similar to the PDU selected and used as a template for structuring a search. Thereafter, the method searches (236, 310) through the plurality of captured PDU to identify (230) those PDUs having fields (FIG. 8) that are similar to the PDU selected and used as the template. Finally, the method displays (238) the identified PDUs to a user. A similar method includes the steps of configuring (330) a tester (200) to identify PDUs that are communicated along the data path that are similar in at least one field (FIG. 8), displaying, in real time, PDUs that are identified as having at least one similar field, and further displaying (FIG. 9) at least one sequential PDU with each identified PDU that is displayed, so that the identified PDUs are displayed in context. A computer readable storage medium is also provided to identify related PDUs in a data path. The computer readable medium (230) includes a plurality of code segments (232, 234, 236, 238, 239).

## Description

The present invention generally relates to test and measurement systems, and more particularly to a system and method for monitoring communications in a data network and identifying related protocol data units (PDUs).

A data network is a network (with or without nodes performing switching functions) interconnecting a plurality of data processing devices. Such networks are often used to interconnect a number of computers, but can also be used for other data communication purposes, such as telephone-type networks.

Information is generally transmitted in the form of messages, and an individual message will often be divided into a number of discrete packets. In such a network, the routing of the packets may be at least partially controlled or determined by the various nodes in the network. In some cases, the route taken by the packets of a message is fixed for a connection, and all packets follow that route. In others, the various packets for a connection may follow different routes through the network. Usually, a number of packets of different connections will be interleaved on any particular link between two adjacent nodes in the network.

Such networks tend to suffer from faults. Both cause and effect of a fault may be immediately evident. For example, the physical linkage between two nodes may be interrupted; or no packets may be received from a particular node. However, network faults are often subtle in both their causes and effects, and it may even not be clear whether there is a fault or not. For example, a poor response time of the network may be due to a fault or an unusual and extreme workload imposed on it.

A variety of instruments are available for network fault diagnosis (using the term "diagnosis" in a broad sense). At the lowest level, there are voltage level testers, continuity testers, etc. At a slightly higher level, there are signal presence testers such as LED instruments.

However, many network faults occur at a higher level and take the form of a violation of the operating procedure or protocol, which the communicating entities have generally implicitly agreed to. Matters are further complicated by the fact that when, for example, two computers communicate over a network, they generally do so using a multi-layered protocol stack to format and control the communication process. In such cases, at least conceptually, a protocol entity of each layer of the protocol stack of one computer communicates with a corresponding protocol entity of the same layer of the other computer, this communication being by the exchange of so-called "protocol data units" (PDUs) that carry control information relevant to the protocol layer concerned as well as user data. Thus, several protocols, each at a different level, are concurrently in use, any one of which could give rise to a communication fault.

Because a protocol is describable in terms of a set of states with transitions between the states determined, at least in part, by the type of protocol data unit received (this type being set by the control information of the protocol data unit), it is possible to identify protocol violations by examining the sequence of protocol data units passing over the network between the relevant pair of communicating entities. A protocol analyzer is an instrument designed to carry out such a task.

In using a protocol analyzer, the analyzer is attached to a suitable point in the network. It detects and analyzes packets to produce a listing of the protocol data units relevant to the protocol being monitored (generally a low-level, e.g., link level protocol). By inspecting this listing, the operator can see the nature of the traffic at the point and recognize various kinds of errors.

The simplest form of listing is a listing of all protocol data units associated with the protocol being monitored. However, analysis of such a "raw" listing is an onerous task. There will usually be a large variety of sets of such protocol data units passing any given point in the network, each set having a different source and/or destination entity. Further, both the number and the complexity of the protocols used in a typical large system are not easy to manage.

It has therefore been known to make the data collection by protocol analyzers "programmable." That is, the analyzer can be programmed by the user to respond only to conditions determined by the user. These conditions can be regarded as a filter which operates on the input data stream, and can be described as "mask" filtering.

Such analyzers can generally select protocol data units passing between two selected protocol entities. The user can also set the analyzer to respond only to certain sequences of protocol data units; obviously, the chosen sequences will usually be those indicative of errors or abnormal conditions. As just noted, however, the complexity of a protocol can often be high, and the number of protocols or variations thereof is also liable to be large. Thus, programming the analyzer is an arduous task, and the user is quite likely to program it so as to detect only a limited number of "likely" abnormal conditions, and to rely on a continuous scrolling display of all protocol data units to detect other abnormal conditions.

In short, PDU analyzers of the prior art are generally characterized as either: (1) being too difficult to program in order to obtain a concise list of PDUs to analyze, or (2) returning too many PDUs in response to a general selection criteria, and therefore displaying too many PDUs for meaningful evaluation by a user. Another shortcoming of prior art PDU analyzers is that context information is often lost. That is, when filter criteria has been established and data collected by the analyzer, prior art analyzers typically display only PDUs that satisfied the filter criteria, and surrounding PDUs are lost.

Accordingly, it is desired to provide an improved system and method for analyzing PDUs that overcomes the shortcomings noted above.

Certain objects, advantages and novel features of the invention will be set forth in part in the description that follows and in part will become apparent to those skilled in the art upon examination of the following or may be learned with the practice of the invention. The objects and advantages of the invention may be realized and obtained by means of the instrumentalities and combinations particularly pointed out in the appended claims.

To achieve the advantages and novel features, the present invention is generally directed to a system and method for identifying related protocol data units (PDUs) in a data path of a data network. In accordance with one aspect of the invention, a method is provided that operates by capturing a plurality of PDUs that are communicated along the data path. Then, one (or more) of the captured PDUs is selected and used as a template for structuring a search. Thereafter, the method searches through the plurality of captured PDU to identify those PDUs having fields that are similar to the PDU selected and used as the template. Finally, the method displays the identified PDUs to a user.

In accordance with one embodiment of the inventive method, the selected PDU may be modified to define a search criteria for the step of searching. For example, the selected PDU may contain and display a certain value in the precedence header field. This value may be modified for purposes of the search (i.e., the step of searching, searches based upon the modified value. Likewise, one or more header fields within the selected PDU may be emphasized, de-emphasized, or even ignored altogether for purposes of executing the searching step. The step of displaying the search results may be executed so that it displays sequential PDUs adjacent to the PDUs identified in the search step. Displaying adjacent PDUs in this way effectively preserves context information, which is often important to the process of testing and debugging. Further still, the preferred embodiment may provide features that allow a user to scroll or advance forward and backward through the list of all PDUs identified in the search step.

In accordance with another aspect of the invention, a similar method is provided for identifying related PDUs in a data path of a data network. This similar method includes the steps of configuring a tester to identify PDUs that are communicated along the data path that are similar in at least one field, displaying, in real time, PDUs that are identified as having at least one similar field, and further displaying at least one sequential PDU with each identified PDU that is displayed, so that the identified PDUs are displayed in context.

In accordance with yet another aspect of the invention, a computer readable medium is provided for identifying related PDUs in a data path of a data network. The computer readable medium includes a first code segment configured to control the set-up of the tester and the capture of data. The computer readable medium also includes other code segments as well. A second code segment is configured to modify a selected PDU to emphasize at least one desired field in the PDU header. A third code segment is configured to search a memory segment containing captured PDUs for other PDUs having header fields that are similar to the at least one emphasized field. A fourth code segment is configured to display identified, related PDUs. Finally, a fifth code segment is configured to allow a user to scroll forward and backward to other related PDUs.

The accompanying drawings incorporated in and forming a part of the specification, illustrate several aspects of the present invention, and together with the description serve to explain the principles of the invention. In the drawings:
FIG. 1 is a diagram illustrating protocol stacks of two communicating end systems;
FIG. 2 is a diagram illustrating the encapsulation of data transmitted between communicating entities in accordance with the TCP/IP protocol suite;
FIG. 3 illustrates a generic IP packet with a variable length Data field;
FIG. 4 is a block diagram illustrating a hypothetical test setup in a data network environment;
FIG. 5 is a block diagram illustrating certain components that may be provided in a tester constructed in accordance with the invention;
FIG. 6 is a flow chart illustrating the top-level functional operation of a tester constructed in accordance with one aspect of the invention;
FIG. 7 is a flow chart illustrating the top-level functional operation of a tester constructed in accordance with another aspect of the invention;
FIG. 8 is a diagram illustrating a screen display of a tester, which display may be used to allow a convenient search configuration for an IP header;
FIG. 9 is a diagram illustrating a screen display of a tester, which display may be provided to display PDUs identified in response to a specified search; and
FIG. 10 is a diagram illustrating various program segments that may be provided to control or carry-out certain functions of a tester constructed in accordance with the invention.

Having summarized various aspects of the present invention above, reference will now be made in detail to the description of the invention as illustrated in the drawings. While the invention will be described in connection with these drawings, there is no intent to limit it to the embodiment or embodiments disclosed therein. On the contrary, the intent is to cover all alternatives, modifications and equivalents included within the spirit and scope of the invention as defined by the appended claims.

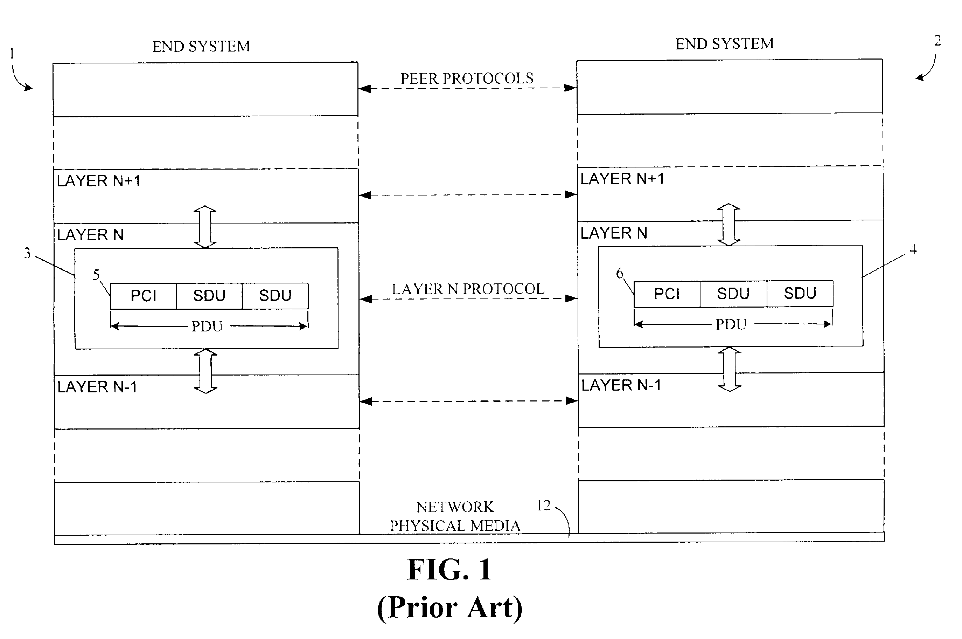

FIG. 1 of the accompanying drawings shows conceptual protocol stacks 1 and 2 operated by two end systems in communicating with each other over a network (12). Each protocol stack 1,2 is made up of a number of different layers each of which performs a particular task in the communication process. Considering by way of explanation, layer N in each protocol stack 1,2, this layer N provides services to the layer above (layer N+1) and in doing so utilizes services provided by the layer below (layer N-1).

Within each layer N a protocol entity 3,4 controls the carrying out of the communication tasks assigned to that layer, this control being effected in coordination with the corresponding protocol entity of the communicating end system. Conceptually, the protocol entities 3,4 in the same protocol layer of the communicating end systems communicate and coordinate with each other in accordance with a peer protocol (for layer N this is the layer N protocol shown in FIG. 1). The peer protocol defines the form and sequencing of messages passed between the peer protocol entities 3,4 in the form of protocol data units 5,6. Each protocol data unit (PDU) 5,6 contains protocol control information PCI and one or more service data units SDU, the latter being data which the layer N protocol entity is handling on behalf of the layer N+1 above.

While conceptually the peer protocol entities 3,4 are communicating with each other by passing protocol data units directly between themselves, in practice, the protocol data units must pass down one protocol stack, across the network 12 and up the other protocol stack to the relevant layer N. A protocol data unit passed by the protocol entity of layer N down to layer N-1 is treated by that latter layer as a service data unit SDU and handled appropriately. Such conceptual layering of communication protocol stacks is well known in the art, and need not be described herein. It will be appreciated that, in practice, the protocol stacks are implemented primarily in software, although the lower levels may well be effected using dedicated hardware.

Each peer protocol may be connectionless or connection-oriented in form. If a peer protocol N is connectionless, the associated protocol entities 3, 4 handle each service data unit SDU passed down to them from layer N+1 as an isolated item. In contrast, if a peer protocol N is connection-oriented, the associated protocol entities 3,4 provide a reliable stream transport service for service data units SDUs passed down from the layer N+1. Generally, most of the peer protocols will be connectionless with one or two key peer protocols being connection oriented.

A protocol entity in layer N may be required to provide a service to a number of different protocol entities in the layer N+1 above. This generally requires that an entity in layer N+1 of a first end system, when sending a PDU to its peer entity in a second end system, provides adequate identification of the destination peer entity to the layer N service--providing entity of the first end system, so that the peer entity in layer N of the second end system can forward the PDU to the appropriate entity in layer N+1.

A protocol entity in, for example, layer N+1 of one end system may also be required to communicate with peer entities in a number of other end systems. In this case, where the layer N protocol is connection-oriented, then, of course, it is inadequate for the layer N protocol entity to keep track of its current connections simply by reference to the identity of the destination layer N+1 entity. Alternatively , connections are frequently identified by reference to the combination of source and destination entity identities.

In TCP/IP networks, TCP-layer entities use pairings of endpoints to identify a connection, where an endpoint is the combination of a parameter (IP address) identifying the end system concerned (or, more accurately, an interface of the end system to the network), and a parameter (TCP port number) indicating the source/destination endpoint entity within the end system with which the TCP protocol entity is to communicate. Further explanations and discussions of TCP connection identification may be readily obtained from a variety of sources, and need not be described herein.

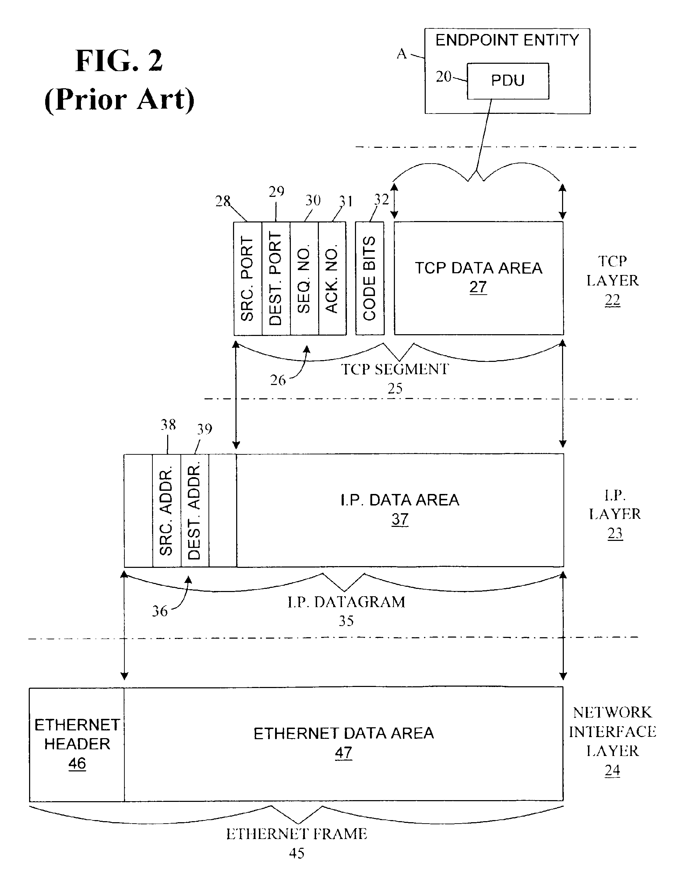

FIG. 2 illustrates how a protocol data unit (PDU) 20 is prepared for transmission over a network from an endpoint entity A in one end system to a peer endpoint entity B (not shown) in another end system in accordance with the TCP/IP protocols, it being assumed that an appropriate TCP connection has already been established. As can be seen, the PDU 20 is passed down through three protocol layers (TCP layer 22, IP layer 23, and network interface layer 24) before being sent across the network to the receiving end system. In each layer, an encapsulation process takes place as will be described more fully below. Although not illustrated in FIG. 2 for reasons of simplicity, a fragmentation process may also occur in one or more layers with the data received by the layer being split up into several units before being passed to the next layer.

As illustrated in FIG. 2, the basic protocol data unit of the TCP layer protocol is the TCP segment 25 which comprises a TCP header 26 and a TCP data area 27. The PDU 20 passed down from the endpoint entity A to the TCP layer 22, constitutes a service data unit for the TCP layer 22 and forms the TCP data area 27 of a TCP segment 25. The TCP header 26 contains a number of information fields of which only those relevant to the present invention are illustrated, these being a source port field 28 holding the TCP port number of the endpoint entity A, a destination port field 29 holding the TCP port number of the destination endpoint entity B to which the PDU 20 is being sent, a sequence number field 30 containing a sequence number for the current TCP segment 25 in relation to other such segments for the same connection, an acknowledgement number field 31 for containing the sequence number of the segment next expected from the peer TCP layer 22 in relation to a current connection, and a code field 32 containing various control codes.

Each TCP segment 25 is passed down to the IP layer 23 as a service data unit of that layer. The basic protocol data unit of the IP layer 23 is the IP datagram 35 comprising an IP header 36 and an IP data area 37. The IP data area 37 is occupied by the service data unit received from the TCP layer 22, that is by the TCP segment 25. The fields of the IP header relevant to the present invention are a source IP address field 38 indicating the IP address of the sending end system, and a destination IP address field 39 containing the IP address of the receiving end system. The source and destination IP addresses are made available to the TCP layer 22 to enable the latter to identify connections based on the pairings of IP address and TCP port number for the source and destination endpoint entities.

In practice, there is frequently a one-to-one correspondence between TCP segments and IP datagrams with no fragmentation of TCP segments; for simplicity, such an arrangement is assumed hereinafter.

The network interface layer 24 serves to match the characteristics of the underlying physical transmission network to the higher-level layers. The network interface layer 24 is arranged to receive IP datagrams 35 as service data units. The basic protocol data unit of the network interface layer 24 is a frame 45 which comprises a frame header 46 and a frame data area 47. The frame data area is occupied by the service data unit received from the IP layer 23, that is by the IP datagram 35.

It will be appreciated that in the case illustrated in FIG. 2, each frame 45 appearing on the physical network contains the IP address and TCP port number of the source and destination endpoint entities using the services of the TCP layer 22 to communicate with each other, these parameters being sufficient to uniquely identify the TCP connection involved. In practice, each IP datagram may be fragmented across several frames; however, generally the frame carrying the first fragment of an IP datagram will be of sufficient size that this fragment includes not only the datagram header, but also the TCP header of the TCP segment encapsulated in the datagram; this is assumed to be the case for the purposes of the following description.

As already discussed above, the TCP layer 22 provides a connection-oriented communication service to the layer above, that is to the endpoint entity A of FIG. 2. The overall progression of a communication between endpoint entities A and B is therefore as follows. Upon the endpoint entity A requesting the services of the TCP layer 22, the latter establishes a connection with the peer TCP layer in the end system containing the endpoint entity B. Once the connection is established, PDUs 20 are passed between the endpoint entity A and its peer entity B until both these entities have finished communicating. Thereafter, the TCP layer closes the connection.

Due to the current popularity and continual growth of the Internet, which utilizes IP, IP has evolved into the dominant network-layer protocol in use today. IP specifies protocol data unit (PDU) format and station-router and router-router interaction. IP provides a connectionless data transfer service to IP users in stations attached to networks of the Internet. The connectionless model on which IP is based provides a robust and flexible basis on which to construct an integrated services network. All major operating systems include an implementation of IP, enabling IP and its companion transport-layer (Layer 4 of the OSI reference model) protocol, the Transmission Control Protocol (TCP), to be used universally across virtually all hardware platforms. One of the major advantages of IP is its tremendous scaleability, operating successfully in networks with only a few users to enterprise-size networks, including the global Internet. Although the concepts and teachings of the present invention apply equally to PDUs of differing layers, for purposes of better illustrating the inventive concepts, the invention will be described in connection with identifying related PDUs in the IP layer. It should be appreciated that the following description is for the purposes of placing the invention into a readily understandable context, and not for providing a definitive description of a particular Internet protocol.

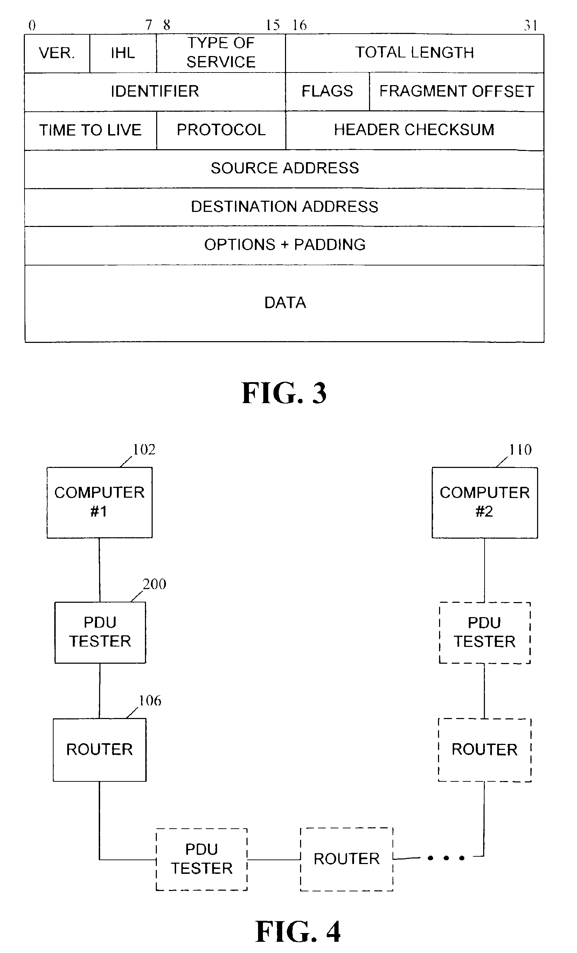

In this regard, reference is now made to FIG. 3, which illustrates a generic IP packet, with a variable length Data field. As is known, an IP packet includes the following fields: the Version field, the Internet Header Length (IHL) field, the Type of Service field, the Total Length field, the Identifier field, the Flags field, the Fragment Offset field, the Time to Live field, the Protocol field, the Header Checksum field, the Source Address field, the Destination Address field, the Options (plus Padding) field, and the Data field.

The Version field indicates the format of the internet header. The IHL is the length of the internet header in 32 bit words, and thus points to the beginning of the data. The minimum value for a correct header is 5. The Type of Service field is an eight-bit field that provides an indication of the abstract parameters of the quality of service desired. These parameters are to be used to guide the selection of the actual service parameters when transmitting a datagram through a particular network.

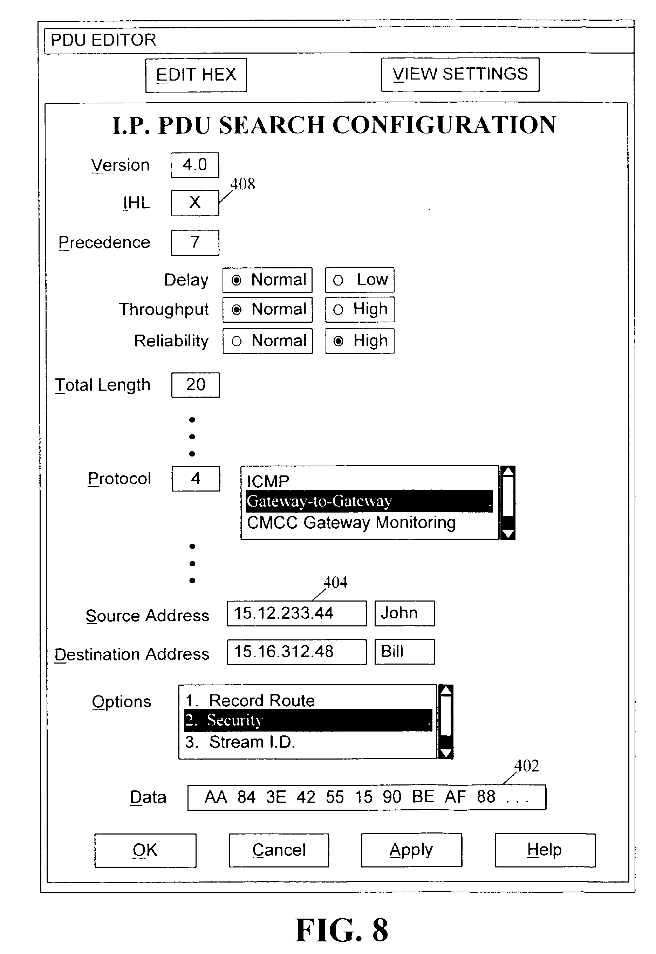

Several networks offer service precedence, which somehow treats high precedence traffic as more important than other traffic (generally by accepting only traffic above a certain precedence at time of high load). The major choice is a three way tradeoff between low-delay, high-reliability, and high-throughput (see also FIG. 8). In many networks, better performance for one of these parameters is coupled with worse performance on another. Except for very unusual cases at most two of these three indications should be set. The type of service is used to specify the treatment of the datagram during its transmission through the internet system.

The Network Control precedence designation is intended to be used within a network only. The actual use and control of that designation is up to each network. The Internetwork Control designation is intended for use by gateway control originators only. If the actual use of these precedence designations is of concern to a particular network, it is the responsibility of that network to control the access to, and use of, those precedence designations.

In keeping with the description of FIG. 3, the Total Length field is a sixteen-bit field that specifies the length of the datagram, measured in octets, including header and data. This field allows the length of a datagram to be up to 65,535 octets.

The Flags field is a three-bit field that specifies whether the data may be fragmented, and whether the current datagram is the last fragment or whether there are more fragments. The Fragment Offset field is a thirteen-bit field that indicates where in the datagram the fragment belongs. The fragment offset is measured in units of 8 octets (64 bits). The first fragment has offset zero. The Time to Live (TTL) field is an eight-bit field that indicates the maximum time the datagram is allowed to remain in the Internet system. If this field contains the value zero, then the datagram is destroyed. This field is modified in Internet header processing, by being decremented each time the datagram passes through a router. The time is measured in units of "hops" , but since every module that processes a datagram must decrease the TTL by at least one , the TTL must be thought of only as an upper bound on the time a datagram may exist. The intention is to cause undeliverable datagrams to be discarded, and to bound the maximum datagram lifetime.

The Protocol field is an eight-bit field that indicates the next level protocol used in the data portion of the internet datagram. The values for various protocols are specified in sources that are well known, and need not be described herein. The Header Checksum field is a sixteen-bit field that provides a checksum on the header only. Since some header fields change (e.g., time to live), this is recomputed and verified at each point that the Internet header is processed. The checksum field is the 16 bit one's complement of the one's complement sum of all 16 bit words in the header. For purposes of computing the checksum, the value of the checksum field is zero.

Finally, the Source Address and Destination Address fields are thirty-two bit fields that specify the logical address of the source of the datagram and the destination of the datagram, respectively. The Options field is a variable-length field. The Data field contains the payload for the IP layer PDU.

Having described protocol stacks generally, and the IP protocol specifically, reference will now be made in more detail to a system and method for identifying related PDUs. As previously summarized, the features of the present invention are preferably utilized in testing apparatus, which can be used to test LAN and ATM communications. Reference is made to FIG. 4, which is a block diagram of a network test setup, which illustrates the placement of a tester 200 constructed in accordance with the invention.

In general, a tester 200 incorporating the inventive concepts may be used to test network communications at any protocol layer. As illustrated, such a tester 200 will be serially connected in a network data path. In FIG. 4, two computers 102 and 110 are illustrated. A tester 200 is series connected between computers 102 and 110. A router 106 is also illustrated in this communication path. Other routers and testers 200 are illustrated in dash line to represent the notion that in a realistic network environment, a data packet commuted from a first computer 102 to a second computer 110 will generally pass through many routers, switches and other devices. Testers 200, such as one incorporating the features of the present invention, may be disposed at various points along the data path. Testers 200 may, in fact, be a single integrated tester simultaneously supporting multiple points of observation, or they may provide a method by which the data captured in the separate testers may be transferred into a single tester for examination of all of the captured data as if they were captured by a single tester. If, in a hypothetical test setup, testers 200 may be at numerous points along the data path between computer 102 and computer 110, it would be observed that the PDU at the IP layer would be nearly identical along all points of the data path. One field, however, that would change would be the time to live field. Specifically, after the datagram is passed through each router 106 along the data path, the time to live field would be decremented. Therefore, and as will be described, if a tester 200 constructed in accordance with the invention were configured to identify a certain datagram passed from computer 102 to computer 110, it would generally be preferable to ignore the time to live field in the IP header.

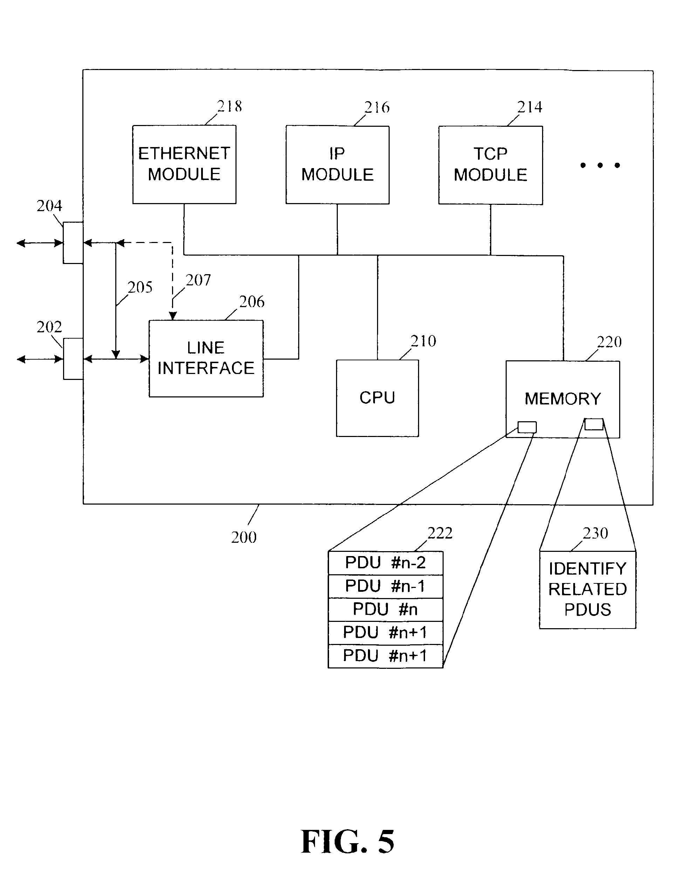

It should be appreciated that a tester 200 may be implemented in a variety of forms, depending upon the sophistication and complexity of the preferred embodiment. Reference is made to FIG. 5, which is a block diagram illustrating certain fundamental components that may be provided in a tester 200 constructed in accordance with the invention. Physically, a tester 200 may have a first connector 202 and a second connector 204 for connection with a data line to form a series connection within the data path. An incoming data line may be directed to a line interface circuit 206. As will be understood by a person skilled in the art, the line interface circuit 206 may contain circuitry configured to receive the continuous-time analog signaling that is provided on the data line, and convert that signaling into discrete time digital signals that may be forwarded to a CPU 210 for handling or manipulation in the digital domain. As illustrated by solid line 205, the connectors 202 and 204, may be directly shorted together so that the signal received at one connector 202 is immediately output at the output connector 204. Alternatively, and as illustrated by dash line 207, the input signal received at connector 202 may be routed through the line interface circuit 206 before being directed back to connector 204. In such a configuration, the signal may be passed through a buffer, or line driver, which may be configured to act as a repeater in order to maintain signal strength as the signal is propagated along the data path.

Within the tester 200, a CPU 210 and memory 220 may be configured to cooperatively operate on data that is received from the data line. In one mode of operation, the tester 200 may receive and store various frames or PDUs that make up the data traffic along the data line. These PDUs may be stored in a segment 222 of the memory 220. Once data has been captured and stored within the memory 220, it may later be retrieved from the memory 220 for viewing or operations thereon. In this regard, various modules may be provided, such as an Ethernet module 218, an IP module 216, a TCP module 214, etc. These modules may be implemented in either hardware, software, or a combination of both, to identify and/or perform operations on data stored within the memory 220.

As will be further described below, the IP module 216, for example, may be utilized and configured to specifically search through the various PDUs stored in memory segment 222 to identify PDUs of interest. To perform this function, the IP module 216 may evaluate the IP header portions of the various PDUs 222. In similar fashion, the Ethernet module 218 may be configured to evaluate Ethernet PDUs, by performing operations on the Ethernet header portion of a data packet. Likewise, the TCP module 214 may be configured to identifying and/or operate upon TCP PDUs stored within the PDU memory segment 222. Consistent with the inventive concepts, other modules may be provided to perform similar functions.

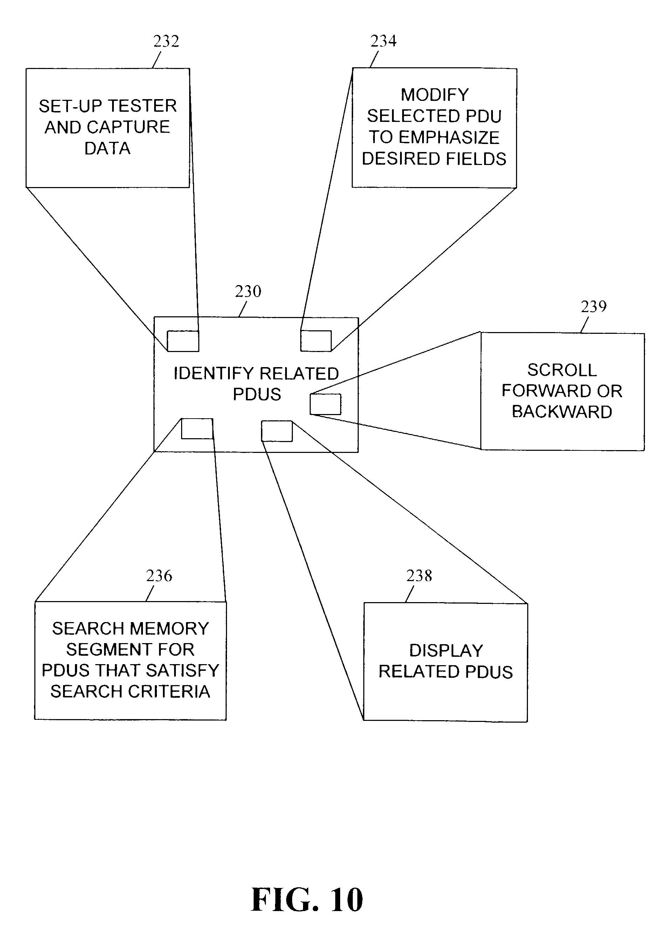

The memory 220 may further include a portion 230 that comprises various program segments that may be configured to control the operation of the CPU to perform various functions of the invention. Examples of such segments are illustrated in connection with FIG. 10.

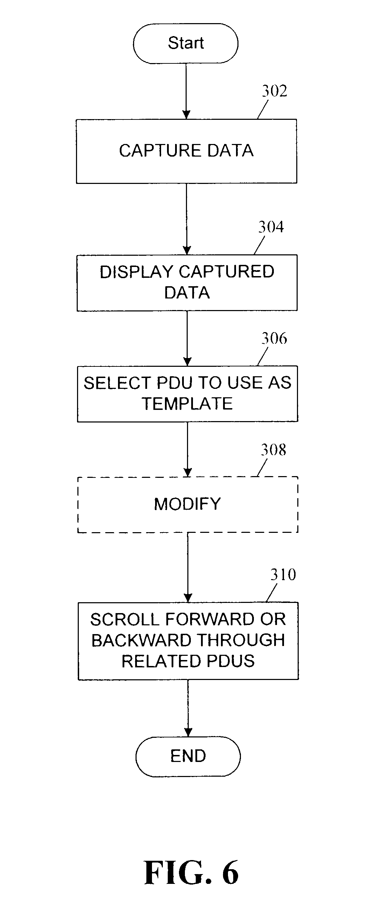

Referring now to FIG. 6, a flow chart illustrating the top-level functional operation of one embodiment of the invention is illustrated. In accordance with one aspect of the invention, data is captured by a tester 200, and later evaluated in order to identify certain PDUs of interest. Specifically, after capturing data, a user may view the data on a display of the tester 200 and select a PDU of interest. Typically, the PDU of interest will be one that has certain qualities or features that a user wishes to search. An example may be a particular source address or destination address for the data. Once the user of the tester 200 has selected a PDU of interest, then utilizing the inventive features described herein, the user may modify portions of the PDU for purposes of structuring an appropriate search.

By way of example, consider a user configuring the tester 200 to search for certain IP PDUs. A display screen, such as that illustrated in FIG. 8 may be displayed to the user. As illustrated, this display screen may display in a user-friendly format all of the fields within the IP header, as well as a data field displaying, for example, the hexadecimal format of the data payload 402 for the IP PDU. Through an appropriate interface, the user may conveniently select one or more of the various header fields and instruct the tester 200 to key on one or more header fields, ignore one or more header fields, or modify one or more header fields (or any combination of the above) to configure the search feature. In this regard, if the user is searching for all data traffic originating from a specified source address, the user may select the source address IP header field 404 and instruct the tester 200 to search for all data communications originating from that same source address, and passing through the tester 200. All other header fields may be ignored. There are a wide variety of ways that a user may instruct a tester constructed in accordance with the invention to ignore various fields, or emphasize other fields of interest. For example, a user may key in "don't care" values (*e.g.*, "X"s) in a given header field to indicate that the values of that field are to be ignored in a search for related PDUs (see the IHL field 408 in FIG. 8).

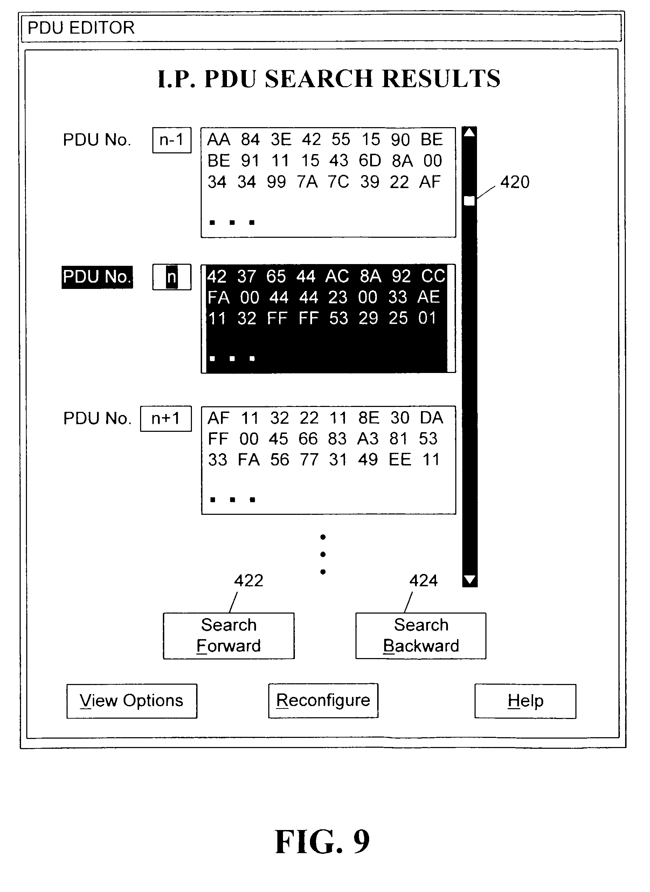

In response, the tester 200 may present a display screen such as that illustrated in FIG. 9. In accordance with one embodiment, the resulting display may display all PDUs that were communicated through the tester 200 during the capture, but may highlight the data fields that were specified by the user. In this way, contextual information may be maintained. That is, when a user views a PDU having the desired destination address, the tester 200 also displays the PDUs immediately proceeding and immediately following the PDU of interest. In accordance with the invention, control features such as "search forward" 422 and "search backward" 424 may be provided in connection with the display to allow the user to conveniently advance to the next PDU (or the previous PDU) having the source address selected by the user.

Alternatively, and in connection with the configuration display of FIG. 8, a user may instruct the tester 200 to identify all PDUs having both a given destination address and a given source address. The tester 200 will then search the PDU memory segment 222 and again display a screen such as that of FIG. 9 to the user.

Further still, the user may select one or more IP header fields and search on certain numerical values at certain byte locations within these fields. If desired, the user could also instruct the tester 200 to search for certain byte values within certain IP header fields, and specifically further instruct the tester by inserting "don't care" values (*i.e.,* "x") in certain byte locations.

It should be appreciated that a tester 200 constructed in accordance with the invention will be quite versatile. What is significant for purposes of the inventive concepts is that a tester 200 may be provided having a capability of capturing a predetermined amount of data, and presenting that data to a user and allowing the user to select a given PDU of interest. Preferably, the PDU of interest will have certain characteristics that the user may desire to search. The inventive tester 200 may then allow the user to modify the selected PDU in order to specify specific search criteria. Thereafter, the tester 200 may highlight all PDUs that were captured within the capture period that satisfy the search criteria specified by the user. In connection with this display of identified PDUs, the tester 200 may display all PDUs surrounding the highlighted PDUs of interest. This allows the user to view the desired PDUs within the appropriate context. In accordance with these inventive features, the user can conveniently configure a tester 200 to search for certain PDUs, and readily display the PDUs of interest without losing any context information.

Returning to the flow chart of FIG. 6, in accordance with one embodiment of the invention, a tester 200 may be configured to capture data for a predetermined capture period of time (step 302). Thereafter, the tester 200 may display the captured data to a user (step 304). In this regard, the display of the captured data may be displayed in pure hexadecimal format (machine code), or may alternatively be displayed in the context of header fields. In this context, the user may instruct the tester to display header fields associated with a given PDU layer - e.g, IP PDUs. Alternatively, the tester 200 may be configured to display different header fields, such as Ethernet headers, TCP headers, etc. Thereafter, the user may select a given, identified PDU to use as a search template (step 306). Optionally, the user may then modify this selected template PDU to omit or emphasize certain fields of interest (step 308). The tester 200, at the user's request, may then highlight specific PDUs that match the search criteria selected by the user, allowing the user to conveniently scroll forward or backward among the emphasized or identified PDUs of interest.

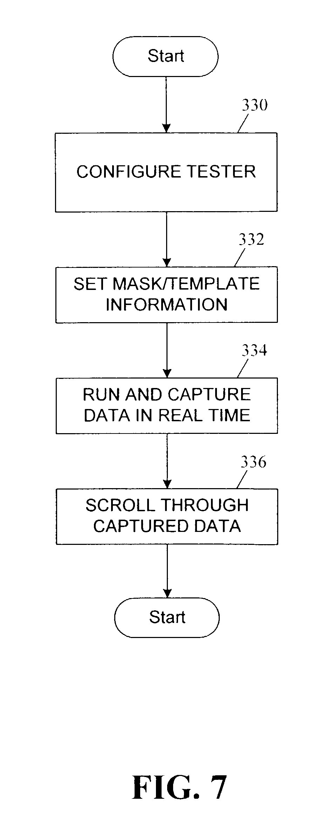

Reference is now made to FIG. 7, which is a flow chart illustrating the top-level operation of an alternative aspect of the present invention. While the preferred embodiment of the present invention generally operates upon captured data, consistent with the broader concepts of the invention, a tester 200 may be preconfigured to search for certain PDUs (step 330). A PDU may be selected from a prior capture, and configured as a template PDU in the manner described above (step 332). Thereafter, the tester 200 may be run to capture only data matching that criteria, until a capture buffer (e.g., memory segment 222) is full (step 334). Alternatively, the template or search PDU may be utilized to trigger a tester, so that it begins sampling and storing PDUs beginning with a first identified PDU of interest. Again, once a capture buffer has been filled with PDU data, the tester 200 may allow a user to conveniently scroll through captured data, by emphasizing or highlighting PDUs that satisfied the user's search criteria (step 336).

Having described the method of the present invention, it will be appreciated that the steps illustrated in the flow chart of FIGs. 6 and 7 are provided for purposes of illustration and is not deemed to be limiting on the broader aspects of the present invention. Indeed, the broader aspects of the present invention may be implemented using a variety of different approaches that are still consistent with the scope and content of the present invention. As illustrated in FIG. 10, a portion of the system is configured to identify related PDUs in a data network environment. In the preferred embodiment, the system comprises software, which may be provided on a computer readable storage medium in a form of code segments that are particularly configured to perform various functions.

In this regard, reference is now made to FIG. 10, which illustrates certain functions which may be carried out by a system constructed in accordance with the teachings of the invention. For example, the program 230 for identifying related PDUs may comprise a plurality of code segments including a segment 232 for controlling the set-up of a tester and the capture of data. Another segment 234 may be provided for modifying a selected PDU (e.g., template) to emphasize certain desired fields. Yet another segment 236 may be configured to search a memory segment for PDUs that satisfy the search criteria. Still another segment 238 may be provided to display the PDUs identified as being related. Another segment 239 may be configured to scroll forward or backward among the identified PDUs. Yet additional segments (not illustrated) may be provided in connection with the system of the present invention, as will be appreciated by persons of skill in the art in light of the teachings provided herein.

It should be appreciated that the flow charts of FIGs. 6 and 7 show the top-level operation of only two features of the present invention. In the flow charts, each block represents a module, segment, or portion of code, which comprises one or more executable instructions for implementing the specified logical function(s). It should also be noted that in some alternative implementations, the functions noted in the blocks may occur out of the order noted in FIGs. 6 and 7. For example, two blocks shown in succession may in fact be executed substantially concurrently or the blocks may sometimes be executed in the reverse order, depending upon the functionality involved.

The foregoing description has been presented for purposes of illustration and description. It is not intended to be exhaustive or to limit the invention to the precise forms-disclosed. Obvious modifications or variations are possible in light of the above teachings. The embodiment or embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly and legally entitled.

## Claims

1. A method for identifying related protocol data units (PDUs) in a data path of a data network comprising the steps of:
capturing (302) a plurality of PDUs (222) that are communicated along the data path;
selecting (306) one of the captured PDUs (222);
using (308) the selected PDU as a template;
searching (236, 310) through the plurality of captured PDU and identifying (230) those PDUs having fields (FIG. 8) that are similar to the PDU selected as the template; and
displaying (238) the identified PDUs to a user.

2. The method as defined in claim 1, further including the step of modifying at least one header field (FIG. 8) of the selected PDU to define a search criteria for the step of searching.

3. The method as defined in claim 1, further including the step of selecting at least one header field (FIG. 8) of the selected PDU to emphasize to define a search criteria for the step of searching.

4. The method as defined in claim 1, further including the step of selecting at least one header field (FIG. 8) of the selected PDU to de-emphasize to define a search criteria for the step of searching.

5. The method as defined in claim 4, wherein the at least one header field is de-emphasized by inserting a don't care value into the header field (FIG. 8).

6. The method as defined in claim 1, further including the step of selecting at least one header field (FIG. 8) of the selected PDU to ignore to define a search criteria for the step of searching.

7. The method as defined in any preceding claim, wherein the step of displaying (238) the identified PDUs further includes displaying successive PDUs (FIG. 9) along with the identified PDUs, permitting the user to view the identified PDUs in context.

8. The method as defined in any preceding claim, further including the step of providing user commands to allow the user to display successive, identified PDUs (FIG. 9) by advancing the display forward (422) and backward (424).

9. The method as defined in any preceding claim, wherein the step of capturing PDUs includes storing all PDUs passing along a data path into a memory (220) segment of a tester (200).

10. The method as defined in claim 9, wherein the step of searching through the captured PDUs includes searching through the memory segment (220) of the tester (200) to identify stored PDUs that are similar to the template.
